# EUROPÄISCHE PATENTSCHRIFT

(11) **EP 0 941 420 B1**
(45) Veröffentlichungstag und Bekanntmachung des Hinweises auf die Patenterteilung: **11.09.2002**
(21) Anmeldenummer: 97949981.1
(22) Anmeldetag: 29.11.1997
(51) Int. Cl.: F16D 65/12, B22D 19/16

(54) **AUS VERBUNDGUSSHERGESTELLTE BREMSGLIEDER, NÄMLICH BREMSTROMMEL, BREMSSCHEIBE ODER DER GLEICHEN SOWIE VERBUNDGIESSVERFAHREN ZUR HERSTELLUNG VON BREMSGLIEDERN**
COMPOSITE CAST BRAKE ELEMENTS, SUCH AS BRAKE DRUM, BRAKE DISK OR THE LIKE, AND COMPOSITE CASTING PROCESS FOR BRAKE ELEMENTS
ELEMENTS CONSTITUTIFS DE FREINS, TELS QUE TAMBOUR, DISQUE OU SIMILAIRE, EN FONTE COMPOSITE, ET PROCEDE DE FONTE COMPOSITE UTILE POUR FABRIQUER DES ELEMENTS CONSTITUTIFS DE FREINS

(30) Priorität: 02.12.1996 DE 19649919
(43) Veröffentlichungstag der Anmeldung: 15.09.1999
(73) Patentinhaber: Actech GmbH, 09599 Freiberg (DE)
(72) Erfinder: WENDT, Florian, D-09599 Freiberg (DE)
(74) Vertreter: Borchard, Wolfgang
(86) Internationale Anmeldenummer: DE9702794
(87) Internationale Veröffentlichungsnummer: WO98025045

(56) Entgegenhaltungen:
- DE-A- 3 823 146
- GB-A- 629 905
- US-A- 2 745 518
- US-A- 4 635 701
- PATENT ABSTRACTS OF JAPAN vol. 009, no. 146 (M-389), 21.Juni 1985 & JP 60 024263 A (HITACHI KINZOKU ET AL.), 6.Februar 1985,
- KEINER ET AL.: "Hochgekohlter Grauguß GG-15 HC - Idealer Werkstoff für Bremsscheiben und Bremstrommeln" KONSTRUIEREN + GIEßEN, Bd. 15, Nr. 4, 1990, DÜSSELDORF DE, Seiten 4-14, XP002061679 in der Anmeldung erwähnt

## Beschreibung

Die Erfindung betrifft das Verbundgießen von Bremsgliedem, insbesondere für Fahrzeuge geeignete Bremstrommeln, Bremsscheiben oder dergleichen, die eine Nabe und einen zur Befestigung von Fahrzeugrädern vorgesehenen Flansch aufweisen, wobei eine Bremsscheibe gegebenenfalls aus zwei Bremsringscheiben bestehen kann, die über durch Gießen hergestellte Verbindungsstege unter Freilassen von Kühl - oder Belüftungskanälen miteinander verbunden sind.

Dergleichen in vielen Fällen von der Fahrzeugindustrie bei Personenkraftfahrzeugen und Lastkraftwagen verwendete Bremstrommeln oder Bremsscheiben sind starken dynamischen und mechanischen Belastungen ausgesetzt, die speziell von einer hohen Temperaturwechselbeanspruchung hervorgebracht werden. Bei Kraftfahrzeugen zum Beispiel werden bei starker Bremsung bei Talfahrt im Gebirge an den Bremsscheiben Temperaturen bis zu 800 ° C erreicht, was bei nachfolgender rascher Abkühlung zu erheblichen Spannungen und in der Folge zu Spannungsrissen führen kann. In der Praxis ist man aus diesem Grunde gehalten, für die Bremsscheibe oder die Bremstrommel einen Werkstoff aus Gußeisen mit Lamellengraphit zu wählen, der eine hohe Wärme - und Temperaturleitfähigkeit sowie einen geringen thermischen Ausdehnungskoeffizienten aufweist.

Ein solch hochgekohlter Grauguß wird zum Beispiel in der DE 37 40 912 A1 wiedergegeben. Nachteilig ist, daß diese Gußeisensorte mit Lamellengraphit einen niedrigen Elastizitätsmodul und eine geringe Zugfestigkeit zwischen 100 N/mm² und 150 N/mm² aufweist. Infolgedessen sind diese Werkstoffe für den Bereich der Nabe und für die Ausbildung des Flansches weniger gut geeignet. Nach W. Keiner, Konstruieren und Gießen 15 (1990) Nr. 4, Seite 4- 14, muß der Querschnitt von schweren Bremstrommeln in diesen Bereichen, namentlich im Übergang zum Flansch, mit einer größeren Materialdicke ausgeführt und um einige Millimeter verstärkt werden. Die Bremsglieder sind dadurch mit einem mehr oder weniger großen Gewicht belastet.

Darüber hinaus ergeben sich außerdem für die Nabe und den Flansch in der Folge von Erschütterungen und Stößen große dynamische Belastungen, wobei der Flansch durch das Einbringen von Gewinde mit den dazugehörenden Radverschraubungen bereits eine geringere Festigkeit aufweist, was zusammen mit der von den Schrauben ausgehenden Kerbwirkung eine Herabsetzung der Biegewechselfestigkeit zur Folge hat.

Um diesen Anforderungen zu genügen ist es bekannt, Bremstrommeln oder Bremsscheiben aus hochwertigen Eisenkohlenstoff- Legierungen oder anderen besonders geeigneten Werkstoffen herzustellen.

Um den Aufwand bei der Herstellung einer aus verschiedenen Werkstoffen gebildeten Bremsscheibe zu verringern, wurde in der DE 22 63 654 A1 vorgeschlagen, den konzentrisch um die Radnabe angeordneten Bremskörper in Form einer Bremsscheibe oder einer Bremstrommel als Verbundteil in einem einheitlichen Gußstück herzustellen. Hierzu wird bei der Herstellung der Nabe von einem Gesenkschmiedestück aus Stahl oder von einem Gußeisenteil aus Kugelgraphit ausgegangen. Zur Verbesserung des Verbundes wird ein Verbindungssteg mit Aussparungen vorgesehen, welcher als umlaufender Flansch mit geringer Wandstärke ausgebildet ist. Ein völliges Verschweißen des Metalls mit dem Steg soll nicht vorgesehen werden, damit zwischen dem Blech und dem Gießmetall eine geringe Spalte mit einer geräuschdämmenden Wirkung verbleibt. Andererseits ist bei einem dickeren umlaufenden Steg eine große Abschreckwirkung gegenüber dem einströmenden Gußeisen und eine Bildung von Zementit zu verzeichnen. Infolgedessen ist ein nachfolgendes Tempern erforderlich. Dadurch steigen die Kosten bei der Herstellung. Des weiteren ist infolge des geringeren Querschnittes in dem Übergang zwischen der Nabe und dem Bremskörper eine geringere Kraftübertragung möglich, die den Anwendungsbereich der Bremsscheibe oder der Bremstrommel erheblich einengt.

Bei diesem Bremsglied befindet sich nach Maßgabe der vorgeschlagenen Verfahrensweise zwischen dem Bremskörper und der Nabe eine umlaufende, zu einem Wärmestau beim Bremsen führende Trennfuge, die einen Wärmefluß vom Bremskörper zur Nabe hin verhindert. Nachteilig ist damit die in diesem Zusammenhang wesentlich größere Ausdehnung des Bremskörpers in Radialrichtung, was im Laufe der Zeit zu einer Zerstörung der Verbindung der Nabe mit dem Bremskörper führen kann.

Um die Einsatzbreite einer durch Verbundgießen hergestellten Bremsscheibe oder Bremstrommel zu erhöhen, ist eine haltbare durch Gießen hergestellte Verbundstelle zwischen der Nabe und der Bremsscheibe beziehungsweise Bremstrommel oder dergleichen vonnöten, damit beim starken Bremsen bei langen Talfahrten ein maximales Drehmoment auf die Bremsbacken übertragen werden kann.

In der JP A 60 024263 wird eine integrierte Rotornabe offenbart, bei der an der Grenzfläche zwischen dem Rotorteil und dem Nabenteil eine Schmelzzonenstruktur mit guten mechanischen Eigenschaften ausgebildet werden soll. Bei diesem Herstellungsverfahren werden die beiden Komponenten in einer gemeinsamen Form, aber aus unterschiedlichen Stählen gegossen. Die Bremsscheibe besteht aus Gußeisen mit Flockengraphit mit thermisch günstigen Eigenschaften und der Nabenteil weist ein Gußeisen mit Kugelgraphit mit hoher mechanischer Festigkeit auf. Durch das gemeinsame Gießen ist die Trennung der beiden Gußwerkstoffe nicht eindeutig, was zu thermischen beziehungsweise mechanischen Fehlbelastungen an den Komponenten des Bremsgliedes führen kann. Die möglichen Folgen sind Verformungen und Risse, die ein Sicherheitsrisiko darstellen.

Die Erfindung bezweckt eine durch Verbundgießen hergestellte, insbesondere für Fahrzeuge geeignete Bremstrommel, Bremsscheibe oder dergleichen, die gegen Thermorisse oder Thermospannungen unempfindlich und mit einem geringen Gewicht ausgestattet ist. Der Anmeldung liegt die Aufgabe zugrunde, ein betriebssicheres Bremsglied aus einem Gußeisenwerkstoff bereitzustellen, das eine hohe Wärmebelastbarkeit beziehungsweise Wärmeleitfähigkeit aufweist und gleichzeitig eine hohe mechanische Festigkeit und einen hohen Elastizitätsmodul besitzt.

Erfindungsgemäß wird die Aufgabe durch die im Patentanspruch 1 aufgeführte Maßnahmen gelöst.

Der Erfindung liegt die Erkenntnis zu Grunde, daß eine hohe mechanische, durch die Materialzusammensetzung des Gußeisenwerkstoffes begründete Belastbarkeit in einen Zusammenhang mit einer vergleichsweise großen Gefahr von Brandrissen zu bringen ist. Diese Gefahr von Brandrissen besteht jedoch nur in den Bereichen, die durch eine hohe Temperaturbelastung gefährdet sind. Das sind die Bereiche, die unmittelbar an die beim Bremsen erhitzten Bremsscheibenring oder den Bremstrommelkörper angrenzen. Diese Gefahr kann durch einen ungenügenden Stoffschluß zwischen den am Energieumsatz beteiligten Teilen des Bremskörpers und der Nabe erhöht werden, wenn kein schnelles Abführen der beim Bremsen entstehenden Wärme möglich ist. In diesen Fällen oder bei extremer Belastung ist die Wärmeausdehnung des Bremsringes oder der Bremstrommel am größten.

Derartige Wärmeausdehnungen werden auf die Nabe übertragen und bewirken in erster Linie eine Vergrößerung des Innendurchmessers der Nabe und der Nabenbohrung im Bereich der Bremsscheibe. Der auf der gegenüberliegenden Seite der Nabe angeordnete Flansch hingegen ist infolge seiner geringeren Erwärmung formstabil, so daß die Nabe zwischen dem Flansch und der Bremsscheibe einer Verformung ausgesetzt wird, die weniger durch Wärmespannungen als durch Tangentialspannungen und Axialzugspannungen gekennzeichnet ist. Wie bei W. Keiner a. a. O. ausgeführt wurde, unterliegen dadurch Bremsscheiben mit einem flachen Topf im Übergang zwischen Flansch und Topf einer größeren Belastung als bei einem relativ hohen Topf, was vor allem durch das hohe Moment verursacht wird, das auf diese Partie infolge des Ausdehnens des Bremsringes beim Erwärmen wirkt. Hier sind bei thermisch belastbaren Werkstoffen Grenzen gesetzt, wenn Felgenanlage und Platzverhältnisse es nicht erlauben, konstruktive Änderungen vorzunehmen.

Aus den genannten Gründen ist es zweckmäßig, wenn die Nabe aus einem höherbelastbaren Gußeisenwerkstoff mit einer größeren mechanischen Festigkeit hergestellt wird. Da die Streckgrenze des Werkstoffes bei steigender Temperatur abnimmt, was mit einer Verringerung des Elastizitätsmoduls verbunden ist, kann die Dauerfestigkeit und die Funktionsfähigkeit der Nabe durch eine formelastische Gestaltung bei thermischer Beanspruchung wesentlich verbessert werden. Die formelastische Gestaltung ist mit einer Abmagerung der Nabe und des Flansches einhergehend.

Bei einer bevorzugten Ausführungsform der Erfindung ist demgemäß vorgesehen, daß die Nabe und der Übergang im Bereich der Nabe vergleichsweise eine durchschnittlich um ein Drittel geringere Querschnittsabmessung aufweist, wobei die zulässigen Spannungen in der Nabe in Abhängigkeit von den beim Bremsen und beim Beschleunigen zu erwartenden Momenten ausgehend bemessen werden. Daraus folgt eine kräftige Abmagerung der Nabe im Vergleich zu bisher bekannten Bremsgliedern, was mit einer erheblichen Gewichtsreduzierung verbunden ist. Durch Verbundgießen können dadurch erstmalig leichtere Bremsglieder mit einem für Bremstrommeln oder Bremsscheiben optimierten Werkstoff hergestellt werden, der für den Leichtbau von Fahrzeugen und die Einsparung von Antriebsenergie besonders gut geeignet ist.

Gemäß einer weiteren Ausgestaltung der Erfindung ist vorgesehen, daß der Bremsscheibenring beziehungsweise der Bremstrommelkörper aus einem Gußeisenwerkstoff mit Lamellengraphit mit einer Zugfestigkeit zwischen 100 N/mm² und 150 N/mm² besteht und der Flansch mit dem Nabenkörper und der Nabe aus einem Gußeisenwerkstoff mit einer Zugfestigkeit größer als 170 N/mm² hergestellt wird. Dadurch wird gewährleistet, daß die in dem jeweiligen Einzelfall erforderlichen Werkstoffzusammensetzungen entsprechend den konstruktiven Wünschen zur Verfügung gestellt werden können.

Im Rahmen der Erfindung ist des weiteren vorgesehen, daß die Bremsglieder durch ein Verbundgießverfahren hergestellt werden, bei dem an den in einen Formhohlraum einzubringenden Körper aus dem höherfesten Gußeisenwerkstoff (GGG), der die spätere Nabe bildet, der zweite Gußeisenwerkstoff hoher Temperaturwechselbeständigkeit (GG), der den Bereich des Bremsscheibenringes beziehungsweise der Bremstrommel bildet, angegossen wird, so daß sich im Übergang der Nabe und der Bremsscheibe beziehungsweise Bremstrommel ein qualitativ einwandfreier stoffschlüssiger Verbund ausbildet. Der Körper aus dem höherfesten Gußeisenwerkstoff(GGG) kann dabei durch Gießen oder durch Einlegen in den Formhohlraum eingebracht werden. Um eine vollkommen stoffschlüssige Verbundstelle zu bewerkstelligen, ist außerdem vorgesehen, daß die im Formhohlraum freiliegenden Bereiche des Nabenkörpers vor dem Gießen mit einem nichtmetallischen Stoffgemisch aus einer borhaltigen Verbindung versehen werden, das die auf der Oberfläche vorhandenen Oxide beseitigt sowie vor einer Oxidation bei höheren Temperaturen schützt, und das beim Gießvorgang weggespült wird, und daß nach dem Aufgießen der Schmelze auf den im Formhohlraum positionierten Körper an der Kontaktfläche zwischen den beiden Werkstoffen eine Temperatur eingestellt wird, die länger als eine Sekunde mindestens 10 °C oberhalb der Solidustemperatur eines der angrenzenden Werkstoffe der Nabe oder der Bremstrommel beziehungsweise des Bremsscheibenringes liegt. Die Ausgangstemperaturen der beiden Gußeisenwerkstoffe, das heißt die Temperatur des Nabenkörpers im Formhohlraum und die Gießtemperatur der aufzugießenden Schmelze, sind entsprechend einzustellen.

Auf das Eingießen des festen Körpers in den Formhohlraum soll die Erfindung nicht begrenzt werden. Insbesondere im Zusammenhang mit der Herstellung einer Bremsscheibe stellt das Einformen eines Formteils in den Formhohlraum eine bevorzugte Variante dar. Wird der Nabenkörper durch Einlegen in den Formhohlraum eingebracht, ist demgemäß ein Erwärmen des Nabenkörpers innerhalb oder außerhalb der Form zum Beispiel mittels Induktionserwärmung erforderlich.

Beim Einbringen des Nabenkörpers in den Formhohlraum durch Gießen ist eine Abkühlung auf die geforderte Temperatur vorzusehen, mindesten jedoch bis zur Erstarrung. Die Reihenfolge der Herstellung des Bremsscheibenringes oder der Bremstrommel und der Nabe kann beliebig erfolgen, mit anderen Worten statt der Nabe kann auch der Bremsscheibenring oder die Bremstrommel zuerst in den Formhohlraum eingebracht und die Nabe bei ansonsten gleicher Verfahrensweise angegossen werden. Werden die Ausgangstemperaturen der beiden Gußeisenwerkstoffe derart gewählt, daß die sich einstellende Ausgleichstemperatur an den Kontaktflächen für eine bestimmte Zeit oberhalb der Solidustemperatur eines der Werkstoffe liegt und wird eine metallisch reine Oberfläche durch den Einsatz eines borhaltigen nichtmetallischen Stoffgemisches gewährleistet, kann durch das Verfahren Verbundgießen eine Bremstrommel oder eine Bremsscheibe mit einem einwandfreien stoffschlüssigen Verbund zwischen der Nabe und dem Bremsscheibenring beziehungsweise der Bremstrommel hergestellt werden, was im nachfolgenden anhand eines Ausführungsbeispiels näher erläutert werden soll.

In den dazugehörigen Zeichnungen zeigt
- Figur 1: eine durch Verbundgießen hergestellte Bremsscheibe mit einem radial nach außen geführten Flansch,
- Figur 2: eine Bremsscheibe mit einem nach innen geführten Flansch,
- Figur 3: einen Querschnitt durch eine Bremsscheibe entlang der in Figur 1 gekennzeichneten Schnittlinie A - A und
- Figur 4: eine Gießform zur Herstellung einer in Figur 1 dargestellten Bremsscheibe in schematischer Darstellung.

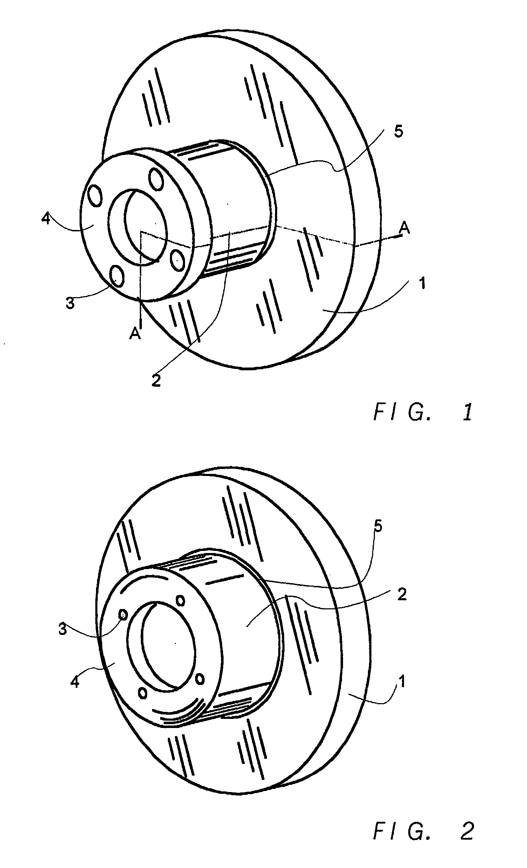

In Figur 1 ist stark schematisiert eine Bremsscheibe dargestellt, die einen Bremsscheibenring 1 und eine sich an den Bremsscheibenring 1 anschließende, im wesentlichen hohlzylindrisch ausgebildete Nabe 2 aufweist. Diese besitzt einen mit Befestigungslöchern 3 versehenen radial nach außen vorspringenden Flansch 4, der für die Befestigung der Radfelgen von Fahrzeugräder eines Kraftwagens oder Fahrzeuges ähnlicher Art ausgebildet ist.

In Figur 2 ist eine zweite Ausführungsform einer Bremsscheibe mit einem radial nach innen weisenden Flansch 4 dargestellt. Es versteht sich, daß die Erfindung an die dargestellten Ausführungsformen einer Bremsscheibe nicht gebunden ist, indem in gleicher Weise insbesondere Bremstrommeln im allgemeinen diesen Aufbau aufweisen, der durch einen Flansch 4 und eine sich anschließende topffömige Nabe 2 beziehungsweise topfförmigen Bremskörper gekennzeichnet ist.

Bestimmend ist, daß die Nabe 2 einen Gußeisenwerkstoff mit einer größeren mechanischen Festigkeit aufweist als der Bremsscheibenring 1, beziehungsweise die nicht weiter bezeichnete Bremstrommel, und daß über eine Verbundstelle 5 eine stoffschlüssige Zusammenfügung zwischen der Nabe 2 und der Bremsscheibe durch Verbundgießen hergestellt wird.

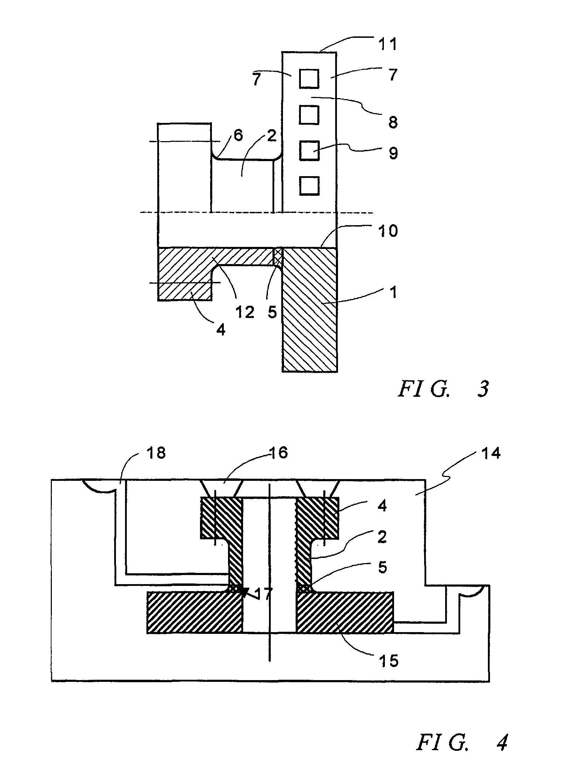

Entsprechend der konstruktiven Ausbildung eines Bremsgliedes sind verschiedene Verbundstellen 5 zwischen der Nabe 2 und dem Bremsscheibenring 1 möglich. Gemäß Figur - 3 kann die Verbundstelle 5 in der Kehle 6 zwischen dem Bremsscheibenring 1 und der rechten Stirnseite der Nabe 2 angeordnet werden. Bei einer in Figur 3 erkennbaren Bremsscheibe, die einen Schnitt längs der Linie A - A in Figur 1 beinhaltet, besteht der Bremsscheibenring 1 aus zwei zueinander parallelen Scheibenkörpern 7, die durch eine Vielzahl von auf dem Umfang alternierend angeordneten Stegen 8 zusammengehalten werden. Auf diese Weise ergibt sich eine belüftete Bremsscheibe.

Zwischen den Stegen 8 werden in dem Ausführungsbeispiel rechteckig ausgeführte Belüftungskanäle 9 freilassen, die von der Nabenbohrung 10 ausgehend bis zu den Außenumfangsflächen 11 des Scheibenkörpers 7 geführt sind. Bei dieser Bremsscheibe kann die Verbundstelle 5 in der gezeigten Vorgehensweise zwischen der Nabe 2 und einem Scheibenkörper 7 angeordnet werden. Oder die Verbundstelle 5 befindet sich beispielsweise an den Stegen 8, wenn die Nabe 2 mittig zwischen den Scheibenkörpern 7 angeordnet werden soll. Dadurch ist bei belüfteten Bremsscheiben nicht ausschließlich nur eine Vorgehensweise für die Strukturierung der Verbundstelle 5 aufgezeigt.

Vorzugsweise wird die Verbundstelle 5 derart angeordnet, daß das hohe Moment übertragbar ist, das infolge der Wärmedehnungen des Bremsscheibenringes 1 auf die Nabe 2 übertragen wird. Hierbei wird die Nabe 2 nicht nur auf Verdrehung beim Bremsen, sondern auch durch einen Biegewechsel beansprucht. Wegen der erforderlichen Zugfestigkeit wird die Nabe 2 aus einem Gußeisenwerkstoff mit einer Zugfestigkeit größer als 170 N/mm² gefertigt. Demgegenüber wird für den Gußeisenwerkstoff des Bremsscheibenringes 1 beziehungsweise eines Bremstrommelkörpers ein Gußeisenwerkstoff mit Lamellengraphit mit einer Zugfestigkeit zwischen 100 N/mm² und 150 N/mm² vorgesehen. Besonders geeignet sind vornehmlich Gußeisenwerkstoffe mit einem hohen groblamellierten Graphitanteil, die sich durch niedrige Thermospannungen und durch einen großen Widerstand gegen Thermorisse auszeichnen. Außerdem besitzt der Gußeisenwerkstoff dadurch eine hohe Temperaturleitfähigkeit, die gewährleistet, daß die beim Bremsen entstehende Wärme schnell abgeleitet wird. Infolgedessen können die Temperaturunterschiede in der gesamten Bremsscheibe niedrig gehalten werden.

Um eine schnelle Temperaturableitung zu ermöglichen, ist die stoffschlüssige Verbundstelle 5 zwischen dem Bremsscheibenring 1 und der Nabe 2 besonders gut geeignet, die durch Verschmelzen aus den beiden Gußeisenwerkstoffen hervorgegangen ist. Insgesamt wird dadurch die freie Dehnung des Bremsscheibenringes 1 in Grenzen gehalten. Die Nachteile einer höheren Temperaturbelastung des Nabenwerkstoffes können durch eine schlankere Konstruktion der Nabe 2 und einen abgemagerten Übergang 12 zwischen dem Flansch 4 und der Nabe 2 ausgeglichen werden. Hierzu wird die Nabe 2 sehr dünnwandig hergestellt und derart bemessen, daß das polare Widerstandsmoment zur Genüge stabil gegenüber der beim Bremsen und Beschleunigen auftretenden Beanspruchung gegen Verdrehung ist.

Die Herstellung einer in Figur 1 oder Figur 3 gezeigten Bremsscheibe erfolgt durch Verbundgießen unter Inanspruchnahme einer in Figur 4 dargestellten Gießform 14, in der die zu der Nabe 2 mit dem Flansch 4 und die zu dem Bremsscheibenring 1 gehörenden Schmelzen gegossen werden, damit ein qualitativ einwandfreier stoffschlüssiger Verbund bewerkstelligt werden kann. Hierbei wird in der Beschreibung des Ablaufs des Verfahrens auf die dargestellte Lage der Bremsscheibe Bezug genommen. Wenn der Formhohlraum für die Bremsscheibe um 180° gedreht wird, ergibt sich ein Wechsel in der Reihenfolge der zuerst zu gießenden Schmelze, was jedoch für das Ergebnis keine weitere Bedeutung hat.

Dementsprechend wird zuerst der Formhohlraum 15 für den Bremsscheibenring 1 mit einer ersten Schmelze gefüllt, die für einen Gußeisenwerkstoff mit Lamellengraphit mit einer Zugfestigkeit zwischen 100 N/mm² und 150 N/mm² vorgesehen ist. Danach wird die Schmelze abgekühlt, bis sich der Gußeisenwerkstoff im festen Zustand befindet. Über den Speiser 16 wird anschließend bei dem Pfeil 17 ein nichtmetallisches Stoffgemisch in der Schichtdicke zwischen 0,5 und 1,5 mm eingeführt, das in der Hauptsache aus einer borhaltigen Verbindung besteht und das dazu geeignet ist, an der freiliegenden Fläche des Bremsscheibenringes 1 bei der Abkühlung entstandene Oxide zu lösen und vor einer weiteren Oxidation durch Verhinderung des Sauerstoffdurchtritts zur Oberfläche zu schützen. Für das nichtmetallische Stoffgemisch kommt eine Zusammensetzung in Frage, die aus 54 % Na₂B₄O₇, 38 % B₂O₃, 4 % K₂ZrF₆ und 4 % SiO₂ hergestellt worden ist. Nach dem Ausbreiten und Einwirken des nichtmetallischen Stoffgemisches auf der Oberfläche wird über den Anschnitt 18 die zweiten Schmelze für die Ausbildung der Nabe 2 und den Flansch 4 eingegossen. Für dieses Schmelze wird ein Gußeisenwerkstoff mit einer Zugfestigkeit größer als 170 N/mm² vorgesehen. Beim Abgießen der zweiten Schmelze darf der Bremsscheibenring 1 nur soweit abkühlen und muß die Gießtemperatur derart bemessen sein, daß sich an der Verbundstelle 5 eine Ausgleichstemperatur einstellt, die mindestens 10 ° C über der Solidustemperatur eines der Gußeisenwerkstoffe für den Bremsscheibenring 1 oder für die Nabe 2 und den Flansch 4 liegt. Das heißt, die Gießtemperatur der zweiten Schmelze und die Temperatur des Körpers im Formhohlraum müssen unter Berücksichtigung der konkreten geometrischen Gestaltung und thermischen Eigenschaften des Systems Gußeisenwerkstoff 1 - Gußeisenwerkstoff 2 - Formstoff so aufeinander abgestimmt werden, daß diese Bedingungen erfüllt wird. Das nichtmetallische Stoffgemisch wird beim Aufgießen des zweiten Gußeisenwerkstoffes von der Verbundstelle 5 verdrängt und aufgrund seiner im Verhältnis zur Schmelze geringeren Dichte auf den Speiser 16 aufgeschwemmt. Auf diese Art und Weise wird eine fehlerfreie Verbundstelle 5 zwischen dem Bremsscheibenring 1 und der Nabe 2 bewerkstelligt, die auch bei einem abgemagerten Querschnitt der Nabe eine sichere Übertragung der beim Bremsen und bei Erwärmung auftretenden Momente gewährleisten kann.

## Patentansprüche

1. Verbundgießverfahren zur Herstellung von Bremsgliedern, nämlich Bremstrommeln, Bremsscheiben oder dergleichen, die eine Nabe und einen zur Befestigung vorgesehenen Flansch und entsprechende Reibflächen aufweisen, wobei eine Bremsscheibe gegebenenfalls aus zwei Bremsscheibenringen besteht, die über durch Gießen hergestellte Verbindungsstege unter Freilassen von Kühl - oder Belüftungskanälen miteinander verbunden sind, mit einem Bremsscheibenring (1) beziehungsweise einem mit Bremsbacken in Wirkverbindung stehenden Bremstrommelkörper aus einem Gußeisenwerkstoff mit Lamellengraphit mit einer Zugfestigkeit zwischen 100 N/mm² und 150 N/mm² mit einer hohen Temperaturwechselbeständigkeit, und wobei die Nabe (2) und der Flansch (4) aus einem Gußeisenwerkstoff mit einer höherwertigen Zugfestigkeit größer als 170 N/mm² bestehen, **dadurch gekennzeichnet, daß** die Nabe (2) mit dem Bremsscheibenring (1) beziehungsweise Bremstrommelkörper durch Verbundgießen unter Ausbildung einer stoffschlüssigen Verbundstelle (5) verbunden ist, welche durch Angießen einer Schmelze aus dem einen Gußeisenwerkstoff an einen festen Körper aus dem anderen Gußeisenwerkstoff gebildet ist, der durch Gießen und Abkühlen oder Einlegen und Erwärmen in den Formhohlraum eingebracht ist, wobei nach dem Abgießen der Schmelzen an der Verbundstelle (5), welche die Kontaktfläche zwischen den Gußeisenwerkstoffen bildet, eine Temperatur eingestellt wird, die mindestens 10 °C oberhalb der Solidustemperatur eines der angrenzenden Gußeisenwerkstoffe der Nabe (2) oder des Bremsscheibenringes (1) beziehungsweise des Bremstrommelkörpers liegt, wobei die freiliegenden Abschnitte des im Formhohlraum befindlichen Körpers, das heißt die zum Angießen vorgesehene Verbundstelle (5) zuvor mit einem nichtmetallischen Stoffgemisch aus einer reduzierenden und vor einer Oxidation schützenden borhaltigen Verbindung beschichtet wird.

2. Bremsglied, hergestellt durch ein Verbundgießverfahren nach Anspruch 1, **dadurch gekennzeichnet, daß** die Nabe (2) und der Übergang (12) im Bereich der Nabe (2) derart bemessen ist, daß das polare Widerstandsmoment stabil gegenüber den zulässigen Spannungen in der Nabe (2) in Abhängigkeit von den beim Bremsen und beim Beschleunigen zu erwartenden Beanspruchungen gegen Verdrehen ist.

3. Bremsglied nach Anspruch 2
**dadurch gekennzeichnet, daß** die Nabe (2) aus einem höherbelastbaren Gußeisenwerkstoff hergestellt und entsprechend der thermischen Beanspruchung formelastisch ausgebildet ist.

## Claims

1. Composite casting process for the manufacture of brake elements, namely brake drums, brake disks, or the like, which features a hub and a flange provided for securing, and the corresponding friction surfaces, whereby a brake disk may consist of two brake disk rings which are connected to one another by the casting of manufactured connecting webs, leaving free cooling or ventilation channels, with a brake disk ring (1) or respectively a brake drum body located in operational connection with brake blocks, said body being of a cast iron material with lamellar graphite with a tensile strength of between 100 N/mm² and 150 N/mm², with a high temperature resistance, and whereby the hub (2) and the flange (4) are made of a cast iron material with a high value tensile strength greater than 170 N/mm², **characterised in that** the hub (2) is connected to the brake disk ring (1) or respectively the brake drum body by composite casting with the formation of a connection point (5) enclosing the material, which is formed by the casting of a melt from a cast iron material onto a fixed body of the other cast iron material, which is introduced into the mould cavity by casting and cooling or insertion and heating, whereby, after the casting of the melts at the connection point (5), which forms the contact surface between the cast iron materials, a temperature is set which is at least 10 °C above the solidus temperature of one of the adjacent cast iron materials of the hub (2) or of the brake disk ring (1) or the brake drum body respectively, whereby the free sections of the body located in the mould cavity, i.e. the connection point (5) provided for casting-on, is coated beforehand with a non-metallic material mixture of a reducing compound and containing boron to provide protection against oxidation.

2. Brake element manufactured by a composite casting process according to Claim 1, **characterised in that** the hub (2) and the transition (12) in the area of the hub (2) are dimensioned in such a way that the polar moment of resistance is stable against rotation in respect of the permissible stresses in the hub (2) as a function of the loads to be anticipated during braking and acceleration.

3. Brake element according to Claim 2, **characterised in that** the hub (2) is manufactured from a cast iron material with a high loading capacity, and is designed to be form-elastic in accordance with the thermal stress imposed.

## Revendications

1. Méthode de coulée composite pour la fabrication d'éléments de frein, notamment des tambours de frein, de disques de frein ou similaires présentant un moyeu et une bride prévue à la fixation et les surfaces de frictions correspondantes, un disque de frein étant composé le cas échéant de deux anneaux de disque de frein reliés entre eux par des traverses de fixation fabriquées par coulée en laissant libres les canaux de refroidissement ou d'aération, avec un anneau de disque de frein (1) voire un corps de tambour de frein en liaison active avec des segments de frein à partir d'un matériau de fonte avec graphite lamellaire d'une résistance à la traction entre 100 N/mm² et 150 N/mm² ayant une résistance élevée aux changements de température et, le moyeu (2) et la bride (4) étant composés d'un matériau de fonte ayant une résistance à la traction plus élevée supérieure à 170 N/mm², **caractérisée en ce que** le moyeu (2) est relié à l'anneau de disque de frein (1) voire au corps de tambour de frein par coulée composite en formant une interface de composite (5) à adhésion par matière formée par la coulée d'une fonte formée d'un matériau de coulée sur un corps fixe formé de l'autre matériau de coulée qui est appliqué par coulée et refroidissement ou par introduction et réchauffement dans la cavité du moule; après la coulée des fontes à l'interface composite (5) formant la surface de contact entre les matériaux de fonte, il se règle une température supérieure d'au moins 10°C à la température de solidus d'un des matériaux de fonte contigus du moyeu (2) ou de l'anneau de disque de frein (1) voire du corps du tambour de frein, la partie libre du corps se trouvant dans la cavité du moule, c'est-à-dire l'interface composite (5) prévue pour la coulée est recouverte auparavant d'un mélange de matières non métallique à partir d'une liaison réduisante et contenant du bore de protection contre l'oxydation.

2. Elément de frein fabriqué par une méthode de coulée composite selon la revendication 1 **caractérisé en ce que** le moyeu (2) et la transition (12) dans la zone du moyeu (2) sont dimensionnés de façon que le moment de résistance polaire soit stable contre la torsion par rapport aux tensions admises dans le moyeu (2) en fonction des sollicitations à attendre lors du freinage et lors de l'accélération.

3. Elément de frein selon la revendication 2 **caractérisé en ce que** le moyeu (2) est fabriqué à partir d'un matériau de fonte à résistance plus importante et formé de façon élastique conformément à la sollicitation thermique.
